# EUROPEAN PATENT SPECIFICATION

(11) **EP 2 083 370 B1**
(45) Date of publication and mention of the grant of the patent: **31.10.2012**
(21) Application number: 09000442.5
(22) Date of filing: 14.01.2009
(51) Int. Cl.: G06F 21/00

(54) **Method and system for dynamically granting a DRM license using a URL**
Verfahren und System zur dynamischen Gewährung einer DRM-Lizenz unter Verwendung einer URL
Procédé et système pour octroyer dynamiquement une licence DRM à l'aide d'une URL

(30) Priority: 16.01.2008 US 21469 P; 19.06.2008 US 73905 P; 20.08.2008 US 195221
(43) Date of publication of application: 29.07.2009
(73) Proprietor: Broadcom Corporation, Irvine, CA 92617 (US)
(72) Inventor: Krig, Scott, 95054 Santa Clara, CA (US)
(74) Representative: Jehle, Volker Armin

(56) References cited:
- WO-A1-01/44907
- US-A1- 2005 268 343
- US-A1- 2005 278 259
- US-A1- 2007 039 055
- SCHNEIER BRUCE ED - SCHNEIER B: "Applied cryptography" 1 January 1996 (1996-01-01), APPLIED CRYPTOGRAPHY, PROTOCOLS, ALGORITHMS, AND SOURCE CODE IN C, JOHN WILEY & SONS, INC, NEW YORK, PAGE(S) 30 - 44,47 , XP002952163 ISBN: 9780471117094 * page 31 - page 34 *
- MYERS VERISIGN R ANKNEY CERTCO A MALPANI VALICERT S GALPERIN MY CFO C ADAMS ENTRUST TECHNOLOGIES M: "X.509 Internet Public Key Infrastructure Online Certificate Status Protocol - OCSP; rfc2560.txt" IETF STANDARD, INTERNET ENGINEERING TASK FORCE, IETF, CH, 1 June 1999 (1999-06-01), XP015008343 ISSN: 0000-0003
- Wikipedia: "Streaming Media", Wikipedia , 15 January 2008 (2008-01-15), Retrieved from the Internet: URL:http://en.wikipedia.org/w/index.php?ti tle=Streaming_media&oldid=184571479 [retrieved on 2011-02-17]
- Wikipedia: "Query String", Wikipedia , 27 December 2007 (2007-12-27), Retrieved from the Internet: URL:http://en.wikipedia.org/w/index.php?ti tle=Query_string&oldid=180489050 [retrieved on 2011-02-25]
- Wikipedia: "Windows Media DRM", Wikipedia.org , 13 January 2008 (2008-01-13), Retrieved from the Internet: URL:http://en.wikipedia.org/w/index.php?ti tle=Windows_Media_DRM&oldid=184111138 [retrieved on 2001-02-13]

## Description

This application makes reference to and claims priority to United States Provisional Application Serial No. 61/021,469, filed on January 16, 2008, entitled "METHOD AND SYSTEM FOR DYNAMICALLY GRANTING A DRM LICENSE USING A URL,".

This application makes reference to and claims priority to United States Provisional Application Serial No. 61/073,905, filed on June 19, 2008, entitled "METHOD AND SYSTEM FOR DYNAMICALLY GRANTING A DRM LICENSE USING A URL,".

### FIELD OF THE INVENTION

Certain embodiments of the invention relate to securing media content. More specifically, certain embodiments of the invention relate to a method and system for dynamically granting a DRM license using a URL.

### BACKGROUND OF THE INVENTION

Digital rights management (DRM) and electronic license management technologies may be utilized for home video, music, consumer and enterprise software markets. Motion picture studios, cable and satellite TV operators, consumer electronics companies and personal computer manufacturers use DRM technologies to prevent the unauthorized duplication, reception or use of copyrighted video materials.

Further limitations and disadvantages of conventional and traditional approaches will become apparent to one of skill in the art, through comparison of such systems with the present invention as set forth in the remainder of the present application with reference to the drawings.

US 2005/278259 A1 refers to a distributed set of license server processes for managing the issuance of content licenses. Each of the license server processes is operative to generate licenses by which a given end user client obtains given rights for given content, typically the content served from the machine. A distributed set of license server processes operates in a de-centralized manner and without access to third party business logic (e.g., a payment mechanism) or authentication Information associated with end users requesting the given content. An exemplary method for managing issuance of content licenses is also described: After registration/login and/or payment collection, once the content provider decides to make the content available to the end-user, the content provider's site generates a token using the shared-secret agreed between the CDN service provider and the content provider and sends the end-user's browser to the CDN license server. Typically, this will be done in the background while the end-user stays on the content provider's site. Then, the license server validates the token presented by the end-user's browser. The token usually has information to issue the license to "user U with rights R for content C." The license server first validates the token using the shared secret to ensure that the token has been issued by the content-provider's site. Once the token is found to be valid, it generates and issues a DRM license <U, R, C> to the end-user who may then access and play the protected content.

According to the invention, there are provided a method for communication as defined by independent claim 1, a system for securing media content as defined by independent claim 2 and a machine-readable storage as defined by independent claim 3.

A system and/or method for dynamically granting a DRM license using a URL, substantially as shown in and/or described in connection with at least one of the figures, as set forth more completely in the claims.
Advantageously, said media device information comprises at least one of said media device identification, said media device PKI public key and said media device certificate of authority.
Advantageously, the method further comprises receiving one or more HTTP responses and/or queries to one or more requests for said DRM protected media content.
Advantageously, the method further comprises receiving authentication information and/or a web server PKI public key from said server by said media device.
Advantageously, said web server grants a DRM license for gaining access to said media content to said media device.
Advantageously, said generated URL comprises one or more of web server information, media device information, identification of said requested media content and authentication information.
Advantageously, said web server authenticates said media device based on one or more of said authentication information comprised within said URL and authentication information sent separately from said URL.
Advantageously, said web server communicates a rejection of said requesting a digital rights management (DRM) license for gaining access to media content via an HTTP response subsequent to receiving said URL that requests DRM protected media content.

Advantageously, said media device information comprises at least one of said media device identification and said media device PKI public key and said media device certificate of authority.
Advantageously, said at least one processor enables reception of one or more HTTP responses and/or queries to one or more requests for said DRM protected media content.
Advantageously, said at least one processor enables reception of authentication information and/or a web server PKI public key from said server by said media device.
Advantageously, said web server grants a DRM license for gaining access to said media content to said media device.
Advantageously, said generated URL comprises one or more of web server information, media device information, identification of said requested media content and authentication information.
Advantageously, said web server authenticates said media device based on one or more of said authentication information comprised within said URL and authentication information sent separately from said URL.
Advantageously, said web server communicates a rejection of said requesting a digital rights management (DRM) license for gaining access to media content via an HTTP response subsequent to receiving said URL that requests DRM protected media content.
Advantageously, said media device information comprises at least one of said media device identification, said media device PKI public key and said media device certificate of authority.
Advantageously, said at least one code section comprises code for receiving one or more HTTP responses and/or queries to one or more requests for said DRM protected media content.
Advantageously, said at least one code section comprises code for receiving authentication information and/or a web server PKI public key from said server by said media device.
Advantageously, said web server grants a DRM license for gaining access to said media content to said media device.
Advantageously, said generated URL comprises one or more of web server information, media device information, identification of said requested media content and authentication information.
Advantageously, said web server authenticates said media device based on one or more of said authentication information comprised within said URL and authentication information sent separately from said URL.
Advantageously, said web server communicates a rejection of said requesting a digital rights management (DRM) license for gaining access to media content via an HTTP response subsequent to receiving said URL that requests DRM protected media content.

Various advantages, aspects and novel features of the present invention, as well as details of an illustrated embodiment thereof, will be more fully understood from the following description and drawings.

### BRIEF DESCRIPTION OF SEVERAL VIEWS OF THE DRAWINGS

FIG. 1 is a block diagram that illustrates exemplary devices that may be enabled to grant a license and/or access for protected media content, in accordance with an embodiment of the invention.

FIG. 2A is a flow diagram that illustrates an exemplary exchange of information for dynamically granting a license for access to protected media content, in accordance with an embodiment of the invention.

FIG. 2B is a flow diagram that illustrates an exemplary exchange of information for dynamically granting access to protected media content, in accordance with an embodiment of the invention.

FIG. 3 is a flow diagram that illustrates an exemplary exchange of information for dynamically granting access to protected media content, in accordance with an embodiment of the invention.

FIG. 4 is a flow chart that illustrates exemplary steps for dynamically managing access to protected media content, in accordance with an embodiment of the invention.

### DETAILED DESCRIPTION OF THE INVENTION

Certain aspects of the invention may be found in a method and system for dynamically granting a DRM license using a URL. In various embodiments of the invention, a digital rights management (DRM) license and/or access to media content may be requested and/or managed by utilizing an HTTP URL and public key infrastructure. In this regard, a media device may communicate with a web server to gain access to media content controlled by the web server. For example, the media device may generate and send a URL to the web server wherein the URL may comprise information about the web server, the media device and/or a name or identification of the requested media content. Information sent from the web server to the media device may be encrypted with the media device's PKI public key and may be decrypted with its PKI private key. In addition, information sent from the media device to the web server may be encrypted with the web server PKI public key and decrypted with the web server PKI private key. The web server information within the URL may comprise a URL for the web server 100. Moreover, the media device information comprised within the URL may comprise media device identification, PKI public key and/or certificate of authority. In accordance with an embodiment of the invention, the media device may receive HTTP queries and/or responses for the request for DRM protected media content. For example, the web server may grant or reject DRM licenses for the media device. In instances where the DRM license may be granted, the web server may send authentication information and/or its public key to the media device.

The media device may request access to media content controlled by the web server by generating and sending a URL for media content access. For example, the URL for accessing media content may comprise information regarding the web server, the media device, the media content and/or authentication. Alternatively, authentication information may be sent in a separate message. In response, the web server may authenticate the media device. In instances where the web server may reject requests for a DRM license and/or for access to media content, the rejection may be sent to the media device via an HTTP response.

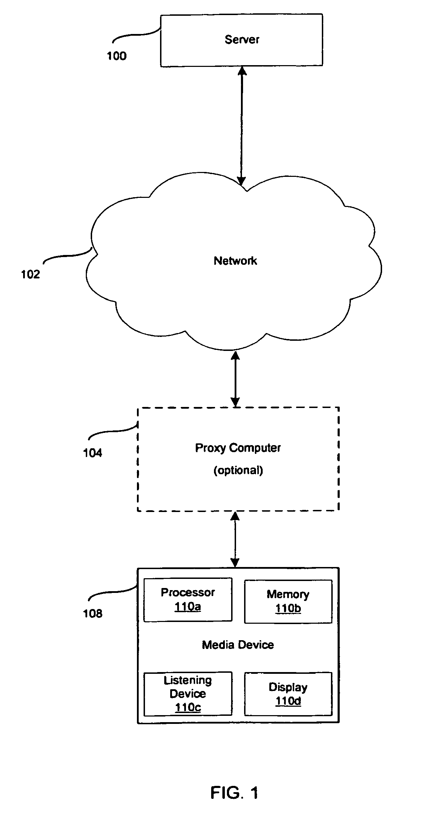

FIG. 1 is a block diagram that illustrates exemplary devices that may be enabled to grant a license and/or access for protected media content, in accordance with an embodiment of the invention. Referring to FIG. 1, there is shown a web server 100, a network 102, a proxy computer 104 and a media device 108.

The web server 100 may comprise suitable logic, circuitry and/or code to enable storage and/or distribution of media content files to various computers and media devices via the network 102 and optionally the proxy computer 104. In this manner, the web server 100 may distribute media content, for example, to users of an on-line music store. The web server 100 may be communicatively coupled with the media device 108 via the network 102 and optionally the proxy computer 104. In addition, the web server 100 may be enabled to handle HTTP queries using a standard HTTP server such as Apache, Microsoft Longhorn Server or any other suitable web server. The web server 100 may maintain a list of public keys and device IDs of authorized media devices/consumers. Moreover, the web server may have its own public key infrastructure (PKI) public and private keys. The web server 100 may generate and distribute licenses and/or manage access to protected media content.

The network 102 may comprise suitable logic, circuitry and/or code to support communication between various distributed devices. The network 102 may be accessible to the general public, for example, via the Internet and/or may be a private network. In addition the network 102 may comprise wireless, wire line and/or optical connectivity. The network 102 may be communicatively coupled with the web server 100, media device 108 and/or optionally the proxy computer 104.

The proxy computer 104 may comprise suitable logic, circuitry and/or code to enable management of media content and/or license acquisition for the for the media device 108. In this regard the proxy computer 104 may handle requests and/or responses for the media device 108. The proxy computer 104 may, for example, be a personal computer or laptop. The proxy computer 104 may be communicatively coupled with the media device 108 via wireless, wireline or optical connectivity and the web server 100 via the network 102. In various embodiments of the invention, management of media content and/or license acquisition may be performed directly by the media device 108 and in such instances the proxy computer 104 may be eliminated.

The media device 108 may comprise suitable logic, circuitry and/or code to manage media content licensing and/or acquisition as well as media content rendering and/or storage. In this regard, the media device 108 may communicate with the web server 100 via the network 102 and optionally the proxy computer 104. The media device 108 may comprise the processor 110a and the memory 112 that may enable acquisition, storage and/or management of media content data. In addition, the media device 108 may be enabled for wireless, wireline and/or optical communication. The processor 110a may enable downloading of one or more DRM licenses and corresponding media content from the web server 100 via the network 102 and optionally the proxy computer 104. The memory 110b may enable storing of media content and one or more databases comprising DRM license information. Moreover, the media device 108 may render the licensed media content via a speaker or listening device 110c and/or visual display 110d. In various embodiments of the invention, the media device 108 may comprise a unique public key infrastructure (PKI) public key and private key and may comprise a unique device ID.

In operation, a DRM license may be dynamically granted on-line via a URL and standard public key infrastructure encryption. In this regard, the media device 100 may generate and send a request for protected media content and/or a DRM license via a standard HTTP URL that may comprise, for example, the web server 100 URL, the media device 108/consumer's public key, the media device 108 device ID and the name of the requested media content. For example, the URL may comprise the following information:
https://web server URL/media device 108 public key-device ID/media content name

Software within the web server 100 may handle the request and may return an HTTP response to the media device 108 granting or rejecting the request. In addition, the standard PKI public key and/or device ID for the media device 108/consumer may be stored on the web server 100 for future management of the licensed media content. Exemplary protected media content may comprise E-books, audio files (MP3 for example), and video files, for example movies. Accordingly, the consumer may pay a fee for the license and/or access to the media content. In this manner, an independent artist or a large online retailer for example, may manage their own media content from a website utilizing public domain cryptography.

In some embodiments of the invention, the proxy server 104 may be utilized for managing and/or acquiring DRM licenses and/or protected media content in a similar manner for the media device 108. In this regard, the media device 108 may be coupled with the proxy computer 104 that may be coupled with the web server 100 via the network 102. A user may execute an application on the proxy computer 104 to download one or more licenses and/or protected media content files from the web server 100 for the media device 108.

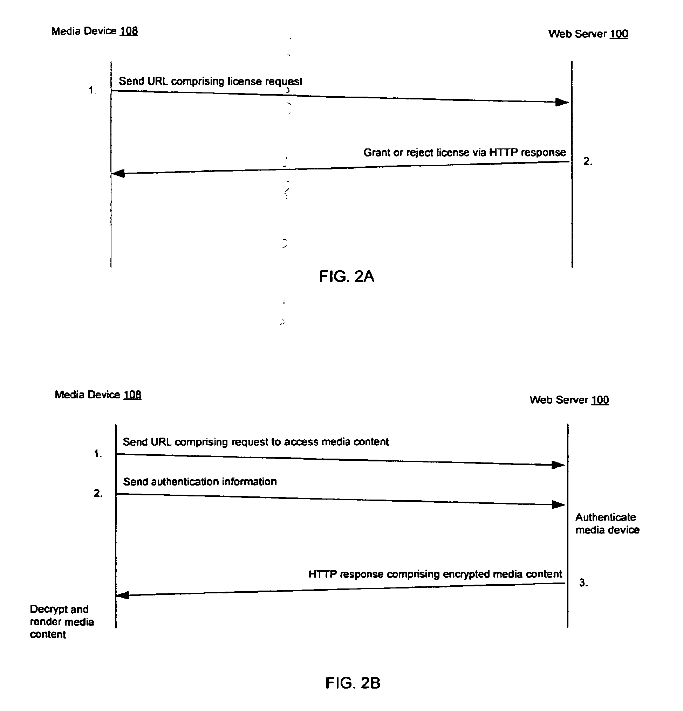

FIG. 2A is a flow diagram that illustrates an exemplary exchange of information for dynamically granting a license for access to protected media content, in accordance with an embodiment of the invention. Referring to FIG 2, there is shown the media device 108 and web server 100 as disclosed in FIG. 1 exchanging information. In this exemplary exchange, the media device 108 may request a DRM license from the web server 100 and the web server 100 may grant or reject the request. In step 1, the media device 108 may send a URL to the web server 100 comprising for example the web server 100 identity, the media device 108/consumer's PKI public key and an indication of media content which to license. In addition, the media device 108 device ID or security certificate may be comprised within the URL. In step 2, the web server 100 may receive the URL from the media device 108, may interpret the information comprised within the URL and may grant or reject the request for a license. For example, in instances where the web server 100 may grant the requested license, the web server 100 may store the URL information received such as the device ID, PKI public key and/or security certificate. In this regard, the web server 100 may maintain information for a plurality of authorized media devices/consumers. The web server 100 may return an HTTP response to the media device 108 that may comprise for example, the web server's PKI public key and/or may comprise authentication information that the media device 108 may utilize for retrieving licensed media content. For example, the authentication information may comprise information regarding the licensed media content and/or may be based on the media device 108 device ID or security certificate for example. Furthermore, a portion or all of the HTTP response from the web server 100 to the media device 108 may be encrypted with the media device/consumer's PKI public key. In this manner, the media device 108 may decrypt the response utilizing its corresponding PKI private key. In various embodiments of the invention, the consumer may pay a fee in order to be granted the license.

FIG. 2B is a flow diagram that illustrates an exemplary exchange of information for dynamically granting access to protected media content, in accordance with an embodiment of the invention. Referring to FIG 2B, there is shown the media device 108 and web server 100, as disclosed in FIG. 1, exchanging information. In this exemplary exchange, a request to access or retrieve licensed media content from the web server 100 may be sent from the media device 108 within a URL to the web server 100 and the web server 100 may comply with or reject the request. In step 1, the media device 108 may generate and send the URL to the web server 100. The URL may comprise the web server 100 identity (or web server's URL), a name or identity of the desired media content and the authentication information, which may have been provided or indicated when the license was obtained. In some embodiments of the invention, authentication information may be sent to the web server 100 in another message. The authentication information and/or other information sent to the web server 100 may be encrypted with the web server's PKI public key such that upon reception, the web server 100 may decrypt it with its own PKI private key. The web server 100 may authenticate the media device 108/consumer and may verify that the media device 108/consumer may be licensed to access the requested media content. In step 2, in instances where the request may be granted, the web server 100 may encrypt the media content with the media device 108/consumer's PKI public key and send the encrypted media content to the media device 108. The media device 108 may decrypt the media content with its own PKI private key and may render the media content.

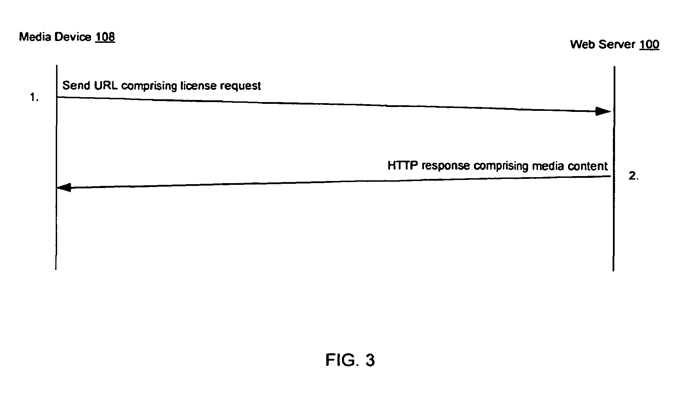

FIG. 3 is a flow diagram that illustrates an exemplary exchange of information for dynamically granting access to protected media content, in accordance with an embodiment of the invention. Referring to FIG 3, there is shown the media device 108 and web server 100, as disclosed in FIG. 1, exchanging information. In this exemplary exchange, a consumer may make a one time request to license and access or retrieve media content from the web server 100 during one set of exchanges. The request may be sent from the media device 108 within a URL to the web server 100 and the web server 100 may comply with or reject the request. In step 1, the media device 108 may send a URL to the web server 100 comprising, for example, the web server 100 identity, the media device 108/consumer's PKI public key and/or certificate of authority and an indication of media content which to license and retrieve. In step 2, the web server 100 may encrypt the requested media content with the media device 108/consumer's PKI public key and may send it to the media device 108. The media device 108 may decrypt the media content with its own PKI private key and may render the media content. The consumer may pay a fee for retrieving the media content.

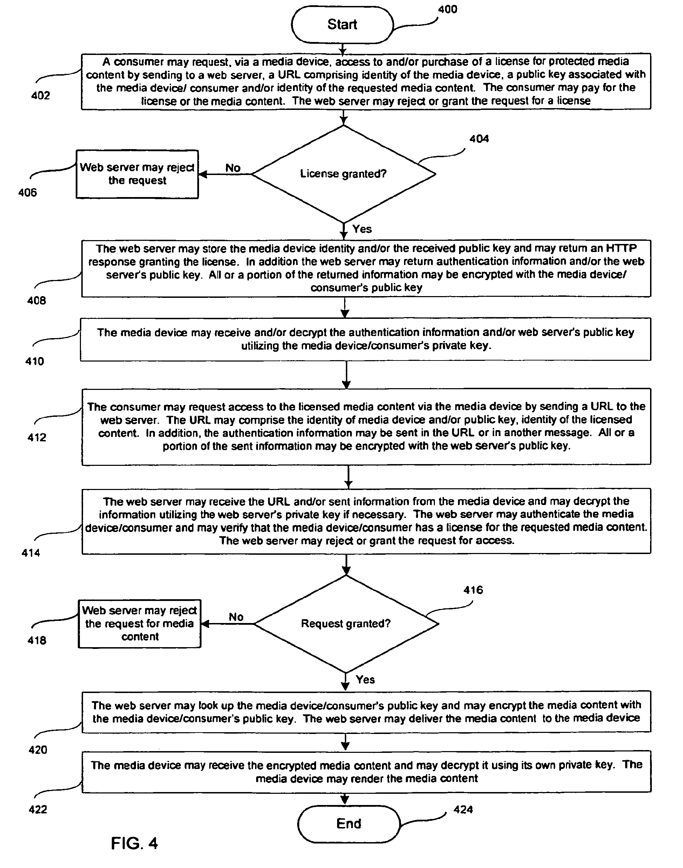

FIG. 4 is a flow chart that illustrates exemplary steps for dynamically managing access to protected media content, in accordance with an embodiment of the invention. Referring to FIG. 4, the step 400 may be a start step. In step 402, a consumer may request, via the media device 108, access to and/or purchase of a license for protected media content by sending to the web server 100, a URL comprising identity of the media device 108, a public key associated with the media device 108/consumer and/or identity of the requested media content. The consumer may pay for the license or the media content. The web server 100 may reject or grant the request for the license. In step 404, if the license may be granted, exemplary steps may proceed to step 408. In step 408, the web server 100 may store the received media device 108 identity and/or the received public key and may return an HTTP response granting the license. In addition the web server 100 may return authentication information and/or the web server's 100 public key. All or a portion of the returned information may be encrypted with the media device 108/consumer's public key. In step 410, the media device 108 may receive and/or decrypt the authentication information and/or the web server's 100 public key utilizing the media device 108/consumer's private key. In step 412, the consumer may request access to the licensed media content via the media device 108 by sending a URL to the web server 100. The URL may comprise the identity of media device 108 and/or the media device 108/consumer's public key and identity of the desired licensed media content. In addition, the authentication information may be sent as part of the URL or in another message. All or a portion of the sent information may be encrypted with the web server's 100 public key. In step 414, the web server 100 may receive the URL and/or sent information from the media device 108 and may decrypt the information utilizing the web server's 100 private key if necessary.

The web server 100 may authenticate the media device 108/consumer and may verify that the media device 108/consumer has a license for the requested media content. The web server 100 may reject or grant the request for access. In step 416, if the request is granted, exemplary steps may proceed to step 420. In step 420, the web server 100 may look up the media device 108/consumer's public key and may encrypt the media content with the media device 108/consumer's public key. The web server 100 may deliver the media content to the media device 108. In step 422, the media device 108 may receive the encrypted media content and may decrypt it using its own private key. The media device 108 may render the media content. Step 424 may be the end of exemplary steps. In step 406, if the request was not granted, Web server 100 may send a rejection of the request to the media device 108. In step 418, if the request was not granted, web server 100 may send a rejection of the request for media content to the media device 108.

In an embodiment of the invention, media content may be secured by requesting via a media device 108, a digital rights management (DRM) license for gaining access to the media content. In this regard, the media content may be managed by a web server 100. The DRM license may be requested by the media device 108 by generating and sending a URL to the web server 100. Accordingly, the URL may comprise web server 100 information, media device 108 information and/or identification of the media content. For example, web server 100 information may comprise a URL for a link to the web server Information sent from the web server 100 to the media device 108 may be encrypted with the media device 108 public infrastructure (PKI) public key and decrypted with the media device PKI private key. In addition, the information sent from the media device 108 to the web server 100 may be encrypted with the web server PKI public key and decrypted with the web server PKI private key.

The web server 100 information within the URL may comprise a URL for the web server 100. Moreover, the media device 108 information within the URL may comprise media device 108 identification, a media device 108 PKI public key and/or a media device 108 certificate of authority. Furthermore, the media device 108 may receive one or more HTTP responses and/or queries to one or more requests for the DRM protected media content. In this regard, the web server 100 may grant or reject the DRM license for gaining access to the media content. In instances where the DRM license may be granted, the web server 100 may send authentication information and/or the web server 100 public key to the media device 108.

The media device 108 may request access to the media content by generating and sending to the web server 100, a URL comprising, for example, web server 100 information, media device 108 information, identification of requested media content and/or authentication information. In response, the web server 100 may authenticate the media device 108 based on authentication information which may have been received from within the URL or sent separately from the URL. In this manner the DRM protected media content may be acquired from the web server 100 utilizing the generated URL. In instances where the web server 100 may reject the request for a DRM license and/or for access to media content, the rejection may be sent to the media device 108 via an HTTP response.

Certain embodiments of the invention may comprise a machine-readable storage having stored thereon, a computer program having at least one code section for dynamically granting a DRM license using a URL, the at least one code section being executable by a machine for causing the machine to perform one or more of the steps described herein.

Accordingly, aspects of the invention may be realized in hardware, software, firmware or a combination thereof. The invention may be realized in a centralized fashion in at least one computer system or in a distributed fashion where different elements are spread across several interconnected computer systems. Any kind of computer system or other apparatus adapted for carrying out the methods described herein is suited. A typical combination of hardware, software and firmware may be a general-purpose computer system with a computer program that, when being loaded and executed, controls the computer system such that it carries out the methods described herein.

One embodiment of the present invention may be implemented as a board level product, as a single chip, application specific integrated circuit (ASIC), or with varying levels integrated on a single chip with other portions of the system as separate components. The degree of integration of the system will primarily be determined by speed and cost considerations. Because of the sophisticated nature of modern processors, it is possible to utilize a commercially available processor, which may be implemented external to an ASIC implementation of the present system. Alternatively, if the processor is available as an ASIC core or logic block, then the commercially available processor may be implemented as part of an ASIC device with various functions implemented as firmware.

The present invention may also be embedded in a computer program product, which comprises all the features enabling the implementation of the methods described herein, and which when loaded in a computer system is able to carry out these methods. Computer program in the present context may mean, for example, any expression, in any language, code or notation, of a set of instructions intended to cause a system having an information processing capability to perform a particular function either directly or after either or both of the following: a) conversion to another language, code or notation; b) reproduction in a different material form. However, other meanings of computer program within the understanding of those skilled in the art are also contemplated by the present invention.

While the invention has been described with reference to certain embodiments, it will be understood by those skilled in the art that various changes may be made and equivalents may be substituted without departing from the scope of the present invention. In addition, many modifications may be made to adapt a particular situation or material to the teachings of the present invention without departing from its scope. Therefore, it is intended that the present invention not be limited to the particular embodiments disclosed, but that the present invention will include all embodiments falling within the scope of the appended claims.

## Claims

1. A method for communication, the method comprising steps of:
generating at a media device, a first URL comprising a web server URL, a media device PKI public key, a device ID of said media device, and a name of DRM protected media content, that requests a license for said DRM protected media content from a web server;
granting by said web server, said request for said license;
storing said media device PKI public key and/or said device ID of said media device on said web server;
sending by said web server, a HTTP response comprising a web server PKI public key and authentication information, wherein said authentication information comprises information regarding said licensed DRM protected media content;
generating at said media device, a second URL that requests said DRM protected media content from said web server, said second URL comprising said web server URL, said name of DRM protected media content, and said authentication information, said authentication information encrypted with said web server PKI public key;
downloading said DRM protected media content from said web server utilizing said second generated URL; and
storing said downloaded DRM protected media content on a memory of said media device.

2. A system for securing media content, the system comprising:
one or more processors in a media device configured to generate a first URL comprising a web server URL, a media device PKI public key, a device ID of said media device, and a name of DRM protected media content, for requesting a license for said DRM protected media content from a web server;
a web server configured to:
grant said request for said license;
store said media device PKI public key and/or said device ID of said media device; and
send a HTTP response comprising a web server PKI public key and authentication information, wherein said authentication information comprises information regarding said licensed DRM protected media content;
said one or more processors in said media device further configured to generate a second URL that requests said DRM protected media content from said web server, the media device including a memory, said second URL comprising said web server URL, said name of DRM protected media content, and said authentication information, said authentication information encrypted with said web server PKI public key;
said one or more processors configured to download said DRM protected media content from said web server utilizing said second generated URL; and
said memory adapted to store said downloaded DRM protected media content.

3. A machine-readable storage having stored thereon, a computer program having at least one code section for securing media content, the at least one code section being executable by a machine for causing the machine to perform steps comprising:
generating at a media device, a first URL comprising a web server URL, a media device PKI public key, a device ID of said media device, and a name of DRM protected media content, that requests a license for said DRM protected media content from a web server;
granting by said web server, said request for said license;
storing said media device PKI public key and/or said device ID of said media device on said web server;
sending by said web server, a HTTP response comprising a web server PKI public key and authentication information, wherein said authentication information comprises information regarding said licensed DRM protected media content;
generating at said media device, a second URL that requests said DRM protected media content from said web server, said second URL comprising said web server URL, said name of DRM protected media content, and said authentication information, said authentication information encrypted with said web server PKI public key;
downloading said DRM protected media content from said web server utilizing said second generated URL; and
storing said downloaded DRM protected media content on a memory of said media device.

## Patentansprüche

1. Verfahren zur Kommunikation, wobei das Verfahren die folgenden Schritte umfasst:
Erzeugen, an einer Medienvorrichtung, einer ersten URL, die eine Webserver URL aufweist, einen öffentlichen PKI-Schlüssel für die Medienvorrichtung, eine Vorrichtungs-ID der Medienvorrichtung, und einen Namens von DRM (Digitales Rechtemanagement) -geschütztem Medieninhalt, und die eine Lizenz an dem DRM-geschützten Medieninhalt von einem Webserver anfordert;
Bewilligen, durch den Webserver, der Anforderung der Lizenz;
Speichern des öffentlichen PKI-Schlüssels für die Medienvorrichtung und/oder der Vorrichtungs-ID der Medienvorrichtung auf dem Webserver;
Senden, durch den Webserver, einer HTTP-Antwort, die einen öffentlichen PKI-Schlüssel für den Webserver und Authentifizierungsinformationen enthält, wobei die Authentifizierungsinformationen Informationen hinsichtlich des lizenzierten DRM-geschützten Medieninhalts enthalten;
Erzeugen, an der Medienvorrichtung, einer zweiten URL, die den DRM-geschützten Medieninhalt von dem Webserver anfordert, wobei die zweite URL die Webserver-URL, den Namen des DRM-geschützten Medieninhalts und die Authentifizierungsinformationen aufweist, wobei die Authentifizierungsinformationen mit dem öffentlichen PKI-Schlüssel für den Webserver verschlüsselt sind;
Herunterladen des DRM-geschützten Medieninhalts von dem Webserver mittels der zweiten erzeugten URL; und
Speichern des heruntergeladenen DRM-geschützten Medieninhalts in einem Speicher der Medienvorrichtung.

2. System zum Sichern von Medieninhalt, wobei das System aufweist:
einen oder mehrere Prozessoren in einer Medienvorrichtung, die konfiguriert sind zum Erzeugen einer ersten URL, die eine Webserver URL aufweist, einen öffentlichen PKI-Schlüssel für die Medienvorrichtung, eine Vorrichtungs-ID der Medienvorrichtung, und einen Namen von DRM (Digitales Rechtemanagement) -geschütztem Medieninhalt, um eine Lizenz an dem DRM-geschützten Medieninhalt von einem Webserver anzufordern;
einen Webserver, der konfiguriert ist zum:
Bewilligen der Anforderung der Lizenz;
Speichern des öffentlichen PKI-Schlüssels für die Medienvorrichtung und/oder der Vorrichtungs-ID der Medienvorrichtung; und
Senden einer HTTP-Antwort, die einen öffentlichen PKI-Schlüssel für den Webserver und Authentifizierungsinformationen enthält, wobei die Authentifizierungsinformationen Informationen hinsichtlich des lizenzierten DRM-geschützten Medieninhalts enthalten;
wobei der eine oder die mehreren Prozessoren in der Medienvorrichtung des Weiteren konfiguriert sind zum Erzeugen einer zweiten URL, die den DRM-geschützten Medieninhalt von dem Webserver anfordert, wobei die Medienvorrichtung einen Speicher aufweist, wobei die zweite URL die Webserver-URL, den Namen des DRM-geschützten Medieninhalts und die Authentifizierungsinformationen aufweist, wobei die Authentifizierungsinformationen mit dem öffentlichen PKI-Schlüssel für den Webserver verschlüsselt sind;
wobei der eine oder die mehreren Prozessoren konfiguriert sind zum Herunterladen des DRM-geschützten Medieninhalts von dem Webserver mittels der zweiten erzeugten URL; und
wobei der Speicher ausgelegt ist zum Speichern des heruntergeladenen DRM-geschützten Medieninhalts.

3. Maschinenlesbarer Speicher, auf dem ein Computerprogramm mit wenigstens einem Codeabschnitt zum Sichern von Medieninhalt gespeichert ist, wobei der wenigstens eine Codeabschnitt von einer Maschine ausführbar ist, um zu veranlassen, dass die Maschine die folgenden Schritte durchführt:
Erzeugen, an einer Medienvorrichtung, einer ersten URL, die eine Webserver URL aufweist, einen öffentlichen PKI-Schlüssel für die Medienvorrichtung, eine Vorrichtungs-ID der Medienvorrichtung, und einen Namen von DRM (Digitales Rechtemanagement) -geschütztem Medieninhalt, und die eine Lizenz an dem DRM-geschützten Medieninhalt von einem Webserver anfordert;
Bewilligen, durch den Webserver, der Anforderung der Lizenz;
Speichern des öffentlichen PKI-Schlüssels für die Medienvorrichtung und/oder der Vorrichtungs-ID der Medienvorrichtung auf dem Webserver;
Senden, durch den Webserver, einer HTTP-Antwort, die einen öffentlichen PKI-Schlüssel für den Webserver und Authentifizierungsinformationen enthält, wobei die Authentifizierungsinformationen Informationen hinsichtlich des lizenzierten DRM-geschützten Medieninhalts enthalten;
Erzeugen, an der Medienvorrichtung, einer zweiten URL, die den DRM-geschützten Medieninhalt von dem Webserver anfordert, wobei die zweite URL die Webserver-URL, den Namen des DRM-geschützten Medieninhalts und die Authentifizierungsinformationen aufweist, wobei die Authentifizierungsinformationen mit dem öffentlichen PKI-Schlüssel für den Webserver verschlüsselt sind;
Herunterladen des DRM-geschützten Medieninhalts von dem Webserver mittels der zweiten erzeugten URL; und
Speichern des heruntergeladenen DRM-geschützten Medieninhalts in einem Speicher der Medienvorrichtung.

## Revendications

1. Procédé de communication, le procédé comprenant des étapes de :
génération, au niveau d'un dispositif multimédia, d'une première URL comprenant une URL de serveur web, une clé publique de PKI de dispositif multimédia, un ID de dispositif dudit dispositif multimédia, et un nom d'un contenu multimédia protégé par une DRM, qui demande une licence pour ledit contenu multimédia protégé par une DRM à un serveur web ;
acceptation, par ledit serveur web, de ladite demande de ladite licence ;
stockage de ladite clé publique de PKI de dispositif multimédia et/ou dudit ID de dispositif dudit dispositif multimédia sur ledit serveur web ;
envoi, par ledit serveur web, d'une réponse HTTP comprenant une clé publique de PKI de serveur web et une information d'authentification, dans lequel ladite information d'authentification comprend une information concernant ledit contenu multimédia protégé par une DRM sous licence ;
génération, au niveau dudit dispositif multimédia, d'une deuxième URL qui demande ledit contenu multimédia protégé par une DRM audit serveur web, ladite deuxième URL comprenant ladite URL de serveur web, ledit nom de contenu multimédia protégé par une DRM, et ladite information d'authentification, ladite information d'authentification cryptée avec ladite clé publique de PKI de serveur web ;
chargement dudit contenu multimédia protégé par une DRM dudit serveur web en utilisant ladite deuxième URL générée ; et
stockage dudit contenu multimédia protégé par une DRM chargé sur une mémoire dudit dispositif multimédia.

2. Système de sécurisation d'un contenu multimédia, le système comprenant :
un ou plusieurs processeur(s) dans un dispositif multimédia configuré(s) pour générer une première URL comprenant une URL de serveur web, une clé publique de PKI de dispositif multimédia, un ID de dispositif dudit dispositif multimédia, et un nom d'un contenu multimédia protégé par une DRM, pour demander une licence pour ledit contenu multimédia protégé par une DRM à un serveur web ;
un serveur web configuré pour :
accepter ladite demande de ladite licence ;
stocker ladite clé publique de PKI de dispositif multimédia et/ou ledit ID de dispositif dudit dispositif multimédia ; et
envoyer une réponse HTTP comprenant une clé publique de PKI de serveur web et une information d'authentification, dans lequel ladite information d'authentification comprend une information concernant ledit contenu multimédia protégé par une DRM sous licence ;
ledit un ou lesdits plusieurs processeur(s) dans ledit dispositif multimédia configuré(s) en outre pour générer une deuxième URL qui demande ledit contenu multimédia protégé par une DRM audit serveur web, le dispositif multimédia incluant une mémoire, ladite deuxième URL comprenant ladite URL de serveur web, ledit nom de contenu multimédia protégé par une DRM, et ladite information d'authentification, ladite information d'authentification cryptée avec ladite clé publique de PKI de serveur web ;
ledit un ou lesdits plusieurs processeur(s) configuré(s) pour charger ledit contenu multimédia protégé par une DRM dudit serveur web en utilisant ladite deuxième URL générée ; et
ladite mémoire adaptée à stocker ledit contenu multimédia protégé par une DRM chargé.

3. Stockage lisible par une machine ayant, stocké sur celui-ci, un programme informatique ayant au moins une section de code pour sécuriser un contenu multimédia, l'au moins une section de code étant exécutable par une machine pour faire en sorte que la machine mette en oeuvre des étapes comprenant :
la génération, au niveau d'un dispositif multimédia, d'une première URL comprenant une URL de serveur web, une clé publique de PKI de dispositif multimédia, un ID de dispositif dudit dispositif multimédia, et un nom d'un contenu multimédia protégé par une DRM, qui demande une licence pour ledit contenu multimédia protégé par une DRM à un serveur web ;
l'acceptation, par ledit serveur web, de ladite demande de ladite licence ;
le stockage de ladite clé publique de PKI de dispositif multimédia et/ou dudit ID de dispositif dudit dispositif multimédia sur ledit serveur web ;
l'envoi, par ledit serveur web, d'une réponse HTTP comprenant une clé publique de PKI de serveur web et une information d'authentification, dans lequel ladite information d'authentification comprend une information concernant ledit contenu multimédia protégé par une DRM sous licence ;
la génération, au niveau dudit dispositif multimédia, d'une deuxième URL qui demande ledit contenu multimédia protégé par une DRM audit serveur web, ladite deuxième URL comprenant ladite URL de serveur web, ledit nom de contenu multimédia protégé par une DRM, et ladite information d'authentification, ladite information d'authentification cryptée avec ladite clé publique de PKI de serveur web ;
le chargement dudit contenu multimédia protégé par une DRM dudit serveur web en utilisant ladite deuxième URL générée ; et
le stockage dudit contenu multimédia protégé par une DRM chargé sur une mémoire dudit dispositif multimédia.
